Europäisches Patentamt

European Patent Office

Office européen des brevets

(11) Veröffentlichungsnummer: **0 437 801 A1**

## EUROPÄISCHE PATENTANMELDUNG

(21) Anmeldenummer: 90125090.2

(22) Anmeldetag: 21.12.90

(51) Int. Cl.⁵: **A01M 7/00**

(30) Priorität: 17.01.90 DE 4001209

(43) Veröffentlichungstag der Anmeldung:
24.07.91 Patentblatt 91/30

(84) Benannte Vertragsstaaten:
BE DE DK FR GB NL

(71) Anmelder: **Amazonen-Werke H. Dreyer GmbH
& Co. KG**
**Am Amazonenwerk 9-13**
**W-4507 Hasbergen-Gaste(DE)**

(72) Erfinder: **Wiemeyer, Benno**
**Im Sande 6**
**W-4531 Lotte-Halen(DE)**

(54) Landwirtschaftliche Verteilmaschine.

(57) Landwirtschaftliche Verteilmaschine, insbesondere Feldspritze mit Vorratsbehälter (Flüssigkeitstank) (2), einem Rahmen (1), einem Verteilergestänge (3), welches mittels eines Parallelogrammgestänges (5) an dem Rahmen befestigt und gegenüber dem Rahmen auf und ab bewegbar angeordnet ist, wobei die vorderen Teile des Parallelogrammgestänges an dem Rahmen und die hinteren Gelenke des Parallelogrammgestänges an dem Verteilergestänge sich befinden. Um eine möglichst in Fahrtrichtung gesehen kompakt bauende Verteilmaschine mit Verteilergestänge zu schaffen, ist vorgesehen, daß die vorderen Gelenke (12) des Parallelogrammgestänges (5) sich in Fahrtrichtung gesehen in einem Abstand nach vorne versetzt zu der Hinterkante des Vorratsbehälters (Flüssigkeitstanks) (2) befinden.

EP 0 437 801 A1

## LANDWIRTSCHAFTLICHE VERTEILMASCHINE

die Erfindung betrifft eine landwirtschaftliche Verteilmaschine gemäß des Oberbegriffes des Patentanspruches 1.

Eine derartige Verteilmaschine ist durch die DE-PS 23 59 400 bekannt geworden.

Bei dieser Verteilmaschine ist das Verteilergestänge mittels eines Parallelogrammgestänges an dem Rahmen der Verteilmaschine angelenkt. Hierbei befinden sich die vorderen Teile des Parallelogrammgestänges am hinteren Ende des Rahmens und hinter dem Vorratsbehälter.

Von Nachteil ist hierbei, daß die Verteilmaschine, insbesondere wenn es sich um ein Anbaumaschine handelt, sehr lang gebaut. Hierbei wirkt sich aus, daß der Schwerpunkt der Anbaumaschine sich in nachteiliger Weise sehr weit von den Kupplungselementen weg verlagert wird.

Der Erfindung liegt nun die Aufgabe zugrunde, eine möglichst in Fahrtrichtung gesehen kompakt bauende Verteilmaschine mit Verteilergestänge zu schaffen.

Diese Aufgabe wird erfindungsgemäß dadurch gelöst, daß die vorderen Gelenke des Parallelogrammgestänges sich in Fahrtrichtung gesehen in einem Abstand nach vorne versetzt zu der Hinterkante des hinteren Endes des Rahmens bzw. der Hinterkante des Vorratsbehälters (Flüssigkeitstanks) befinden. Hierdurch wird auf äußerst einfache Weise der Vorteil erreicht, daß das Verteilergestänge sehr weit nach vorne, d.h. an den Vorratsbehälter herangeschoben werden kann. Es ergibt sich eine äußerst kompakt bauende Verteilmaschine. Eine einfache Konstruktion ergibt sich dadurch, daß die vorderen Gelenke des Parallelogrammgestänges an dem vorderen Teil des Rahmens angeordnet sind. Hierbei sind die vorderen Gelenke in äußerst einfacher Weise bei einer Anbaumaschine an den Rahmenteilen anzuordnen, an denen sich die Kupplungselemente befinden.

Eine äußerst kompakt bauende Verteilmaschine ergibt sich dadurch, daß die oberen und die unteren Lenker des Parallelogrammgestänges in der Draufsicht gesehen U-förmig ausgebildet sind, daß die nach vorne ragenden Schenkel des Parallelogrammgestänges seitlich nach vorne an dem Vorratsbehälter (Flüssigkeitstank) entlang geführt sind, und daß an dem quer zur Fahrtrichtung verlaufenden Schenkel des U-fömigen Parallelogrammgestänges des Verteilergestänges auf- und abbewegbar befestigt ist. Hier ergibt sich der weitere Vorteil, daß die stabil ausgeführten Lenker des Parallelogrammgestänges gleichzeitig einen Rammschutz für den Vorratsbehälter, insbesondere für einen aus Kunststoff hergestellten Flüssigkeitstank bilden. Weiterhin wird auch für Verteilergestänge mit sehr großen Arbeitsbreiten von 24 - 36 m eine sehr einfache Höhenverstelleinrichtung geschaffen, die darüberhinaus in einfacher Weise sehr stabil ist.

Desweiteren ist es in vorteilhafter Weise möglich, die zu den Ausbringelementen des Verteilergestänges führenden Leitungen an den oberen oder unteren nach vorn ragenden Schenkeln des Parallelogrammgestänges entlang zu führen und zu befestigen oder sie durch diese hindurchzuführen. Hierdurch ergibt sich eine geschützte und sauber verlegte Anordnung der Leitungen.

Weitere Einzelheiten der Erfindung sind den übrigen

Unteransprüchen, der Beispielsbeschreibung und den Zeichnungen zu entnehmen. Hierbei zeigen

Fig. 1 eine erfindungsgemäße als Feldspritze ausgebildete Verteilmaschine in der Seitenansicht, wobei das Verteilergestänge sich in der höchstmöglichen Position befindet,

Fig. 2 Verteilmaschine gemäß Fig. 1 in Seitenansicht, wobei das Verteilergestänge sich in der tiefstmöglichen Stellung, vorzugsweise der Transportstellung befindet und

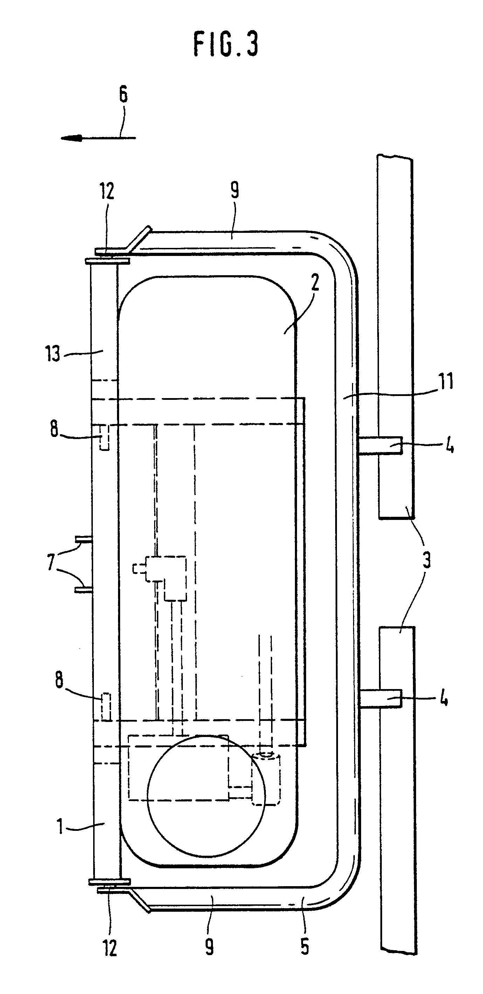

Fig. 3 die Verteilmaschine in der Draufsicht, wobei das Verteilergestänge sich in der Arbeitsstellung befindet.

Die als Feldspritze ausgebildete landwirtschaftliche Verteilmaschine weist den Rahmen 1, den als Flüssigkeitstank 2 ausgebildeten Vorratsbehälter sowie das Verteilergestänge 3 auf. Das Verteilergestänge 3 ist mittels eines Zwischenrahmens 4 und dem Parallelogrammgestänge 5 an dem Rahmen 1 mittels des Hydraulikzylinders 6 auf- und abbewegbr befestigt. Auf der in Fahrtrichtung 6 gesehenen Seite des Rahmens 1 sind das obere Dreipunktkupplungselement 7 und die beiden Bolzen 8, die als untere Kupplungselemente ausgebildet sind, angeordnet.

Das Parallelogrammgestänge 5 besteht aus den beiden oberen Lenkern 9 und den beiden unteren Lenkern 10 sowie den quer zur Fahrtrichtung 6 verlaufenden Schenkeln 11. Die oberen und unteren Lenker 9 und 10 des Parallelogrammgestänges 5 sind in Verbindung mit den quer zur Fahrtrichtung 6 verlaufenden Schenkeln 11 in der Draufsicht gesehen U-förmig ausgebildet. Die nach vorn ragenden Schenkel 9 und 10 des Parallelogrammgestänges 5 sind seitlich nach vorne an dem Flüssigkeitstank 2 entlanggeführt. Die vorderen Gelenke 12 des Parallelogrammgestänges 5 befinden sich in Fahrtrichtung gesehen in einem Abstand nach vorne versetzt zu der Hinterkante des Flüssigkeitstanks 2. Hierbei befinden sich die vorderen Gelenke 12 des Parallelogrammgestänges 5 an dem vorderen Teil 13 des Rahmens 1. Hierbei sind die vorderen Gelenke des Parallelogrammgestänges an den Rahmenteilen befestigt, an denen die Kupplungselemente 7 und 8 sich befinden.

An den quer zur Fahrtrichtung 6 verlaufenden Schenkeln 11 des Parallelogrammgestänges 5 ist das Verteilergestänge 3 über das Zwischenteil 4 auf- und abbewegbar befestigt.

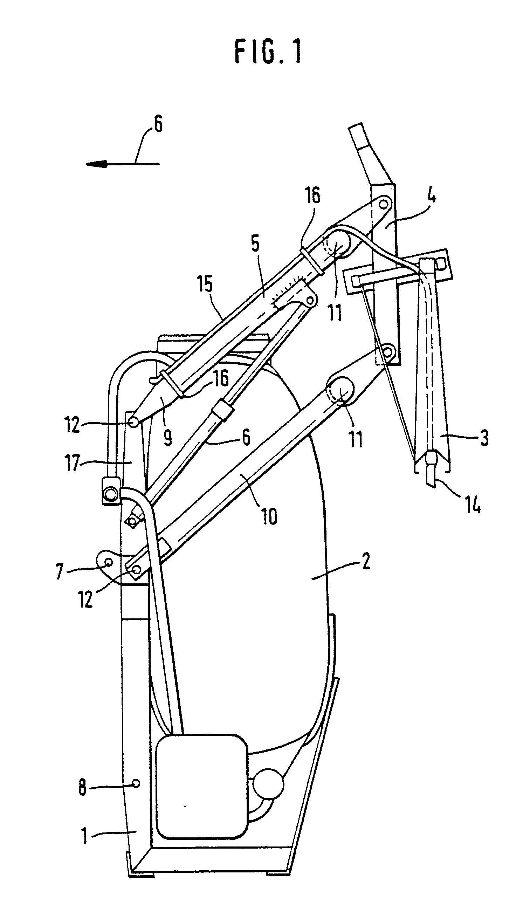

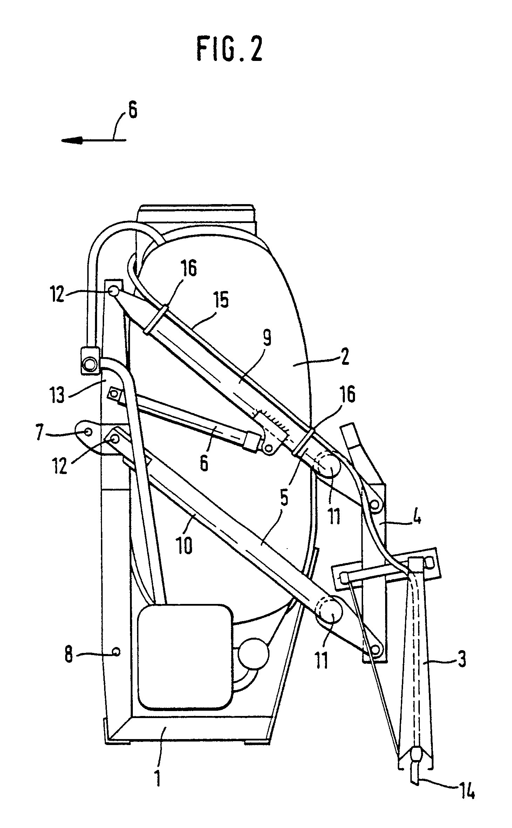

Über die Hydraulikzylinder 6 kann das Verteilergestänge aus der in Fig. 2 dargestellten Transportstellung in Aufwärtsrichtung in die gewünschte Höhenstellung zur Arbeit gebracht werden. Die höchst mögliche Stellung des Verteilergestänges 3 ist in Fig. 1 dargestellt.

Über die Dreipunktkupplungselemente 7 und 8 ist die Feldspritze an den Dreipunktkraftheber eines Ackerschleppers in bekannter Weise anzuordnen.

Die zu den Ausbringelementen 14, die als Düsen ausgebildet sind, führenden Leitungen 15 sind an dem oberen Lenker 9 des Parallelogrammgestänges 5 entlanggeführt und mittels der Schellen 16 befestigt.

**Patentansprüche**

1. Landwirtschaftliche Verteilmaschine, insbesondere Feldspritze mit Vorratsbehälter (Flüssigkeitstank), einem Rahmen, einem Verteilergestänge, welches mittels eines Parallelogrammgestänges an dem Rahmen befestigt und gegenüber dem Rahmen auf und ab bewegbar angeordnet ist, wobei die vorderen Teile des Parallelogrammgestänges an dem Rahmen und die hinteren Gelenke des Parallelogrammgestänges an dem Verteilergestänge sich befinden, dadurch gekennzeichnet, daß die vorderen Gelenke (12) des Parallelogrammgestänges (5) sich in Fahrtrichtung gesehen in einem Abstand nach vorne versetzt zu der Hinterkante des Vorratsbehälters (Flüssigkeitstanks) (2) befinden.

2. Verteilmaschine nach Anspruch 1, dadurch gekennzeichnet, daß die vorderen Gelenke (12) des Parallelogrammgestänges (5) an dem vorderen Teil des Rahmens (1) angeordnet sind.

3. Verteilmaschne nach Anspruch 1, wobei an der Vorderseite des Rahmens Kupplungselemente angeordnet sind, dadurch gekennzeichnet, daß die vorderen Gelenke (12) des Parallelogrammgestänges (5) sich an den Rahmenteilen befinden, an denen die Kupplungselemente (7,8) angeordnet sind.

4. Verteilmaschine nach einem oder mehreren der vorstehenden Ansprüche, dadurch gekennzeichnet, daß die Feldspritze als Anbaugerät zum Anbau an den Dreipunktkraftheber eines Ackerschleppers ausgebildet ist.

5. Verteilmaschine nach einem oder mehreren der vorstehenden Ansprüche, dadurch gekennzeichnet, daß die oberen und unteren Lenker (9,10) des Parallelogrammgestänges (5) in der Draufsicht gesehen U-förmig ausgebildet sind, daß die nach vorne ragenden Lenker (9,10) des Parallelogrammgestänges (5) seitlich nach vorne an dem Vorratsbehälter (Flüssigkeitstanks) (2) entlang geführt sind, und daß an den quer zur Fahrtrichtung verlaufenden Schenkeln (11) des U-förmigen Parallelogrammgestänges (5) das Verteilergestänge (3) auf- und abbewegbar befestigt ist.

6. Verteilmaschine nach einem oder mehreren der vorstehenden Ansprüche, dadurch gekennzeichnet, daß an dem Parallelogrammgestänge (5) ein Zwischenteil (4) des Verteilergestänges (3), an dem das eigentliche Verteilergestänge (3) befestigt ist, angeordnet ist.

7. Verteilmaschine nach einem oder mehreren der vorstehenden Ansprüche, dadurch gekennzeichnet, daß zwischen dem vorderen Rahmenteil der Verteilmaschine und den oberen nach hinten ragenden Lenkern (9,10) des Parallelogrammgestänges (5) jeweils ein Hydraulikzylinder (6) zum Auf- und Abbewegen des Parallelogrammgestänges (5) und des Verteilergestänges (3) angeordnet ist.

8. Verteilmaschine nach einem oder mehreren der vorstehenden Ansprüche, dadurch gekennzeichnet, daß die zu den Ausbringelementen (14) des Verteilergestänges (3) führenden Leitungen (15) an den oberen und/oder unteren nach vorne ragende Lenkern (9,10) des Parallelogrammgestänges (5) entlang geführt und befestigt oder durch diese hindurchgeführt sind.

# FIG. 1

# FIG.2

FIG.3

**Europäisches Patentamt**

**EUROPÄISCHER RECHERCHENBERICHT**

Nummer der Anmeldung

**EP 90 12 5090**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DE-B-2 359 400 (F. SCHUMACHER) <br> * Spalte 4, Zeile 30 - Spalte 5, Zeile 7; Spalte 5, Zeile 20 - Spalte 6, Zeile 2; Figuren 1,2 * <br> — — — | 1 | A 01 M 7/00 |
| A | GB-A-2 102 661 (SWIFTSTREAM ENTERPRISES LTD) <br> * Seite 2, Zeilen 23-52; Figur 3 * <br> — — — | 1 | |
| A | DE-B-1 028 380 (MAUSER KOMMANDIT-GESELLSCHAFT) <br> — — — | | |
| A | DE-B-2 162 640 (F. SCHUMACHER) <br> — — — | | |
| A | GB-A-2 149 281 (MOTESKA SPRAYERS LTD) <br> — — — — — | | |

RECHERCHIERTE SACHGEBIETE (Int. Cl.5)

A 01 M

Der vorliegende Recherchenbericht wurde für alle Patentansprüche erstellt

| Recherchenort | Abschlußdatum der Recherche | Prüfer |
|---|---|---|
| Den Haag | 19 Februar 91 | VISTISEN L.M. |